(19) Europäisches Patentamt
European Patent Office
Office européen des brevets

(11) **EP 2 368 108 B1**

(12) **FASCICULE DE BREVET EUROPEEN**

(45) Date de publication et mention
de la délivrance du brevet:
**10.04.2013 Bulletin 2013/15**

(21) Numéro de dépôt: **09795781.5**

(22) Date de dépôt: **22.12.2009**

(51) Int Cl.:
***G01N 25/18*** *(2006.01)*    ***G01K 17/08*** *(2006.01)*

(86) Numéro de dépôt international:
**PCT/EP2009/067741**

(87) Numéro de publication internationale:
**WO 2010/072758 (01.07.2010 Gazette 2010/26)**

(54) **DISPOSITIF DE DETERMINATION DE COEFFICIENT D'ECHANGE THERMIQUE ET PROCEDE ASSOCIE**

VORRICHTUNG ZUR BESTIMMUNG EINES WÄRMEÜBERTRAGUNGSKOEFFIZIENTEN UND DAMIT ZUSAMMENHÄNGENDES VERFAHREN

DEVICE FOR DETERMINING A HEAT TRANSFER COEFFICIENT, AND ASSOCIATED METHOD

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.12.2008 FR 0859027**

(43) Date de publication de la demande:
**28.09.2011 Bulletin 2011/39**

(73) Titulaire: **Commissariat à l'Énergie Atomique et aux Énergies Alternatives 75015 Paris (FR)**

(72) Inventeur: **BRAILLARD, Olivier F-13770 Venelles (FR)**

(74) Mandataire: **Ilgart, Jean-Christophe BREVALEX 95 rue d'Amsterdam 75378 Paris Cedex 8 (FR)**

(56) Documents cités:
**FR-A- 2 266 869    US-B1- 6 824 305**

• **LEE P S ET AL: "Investigation of heat transfer in rectangular microchannels" INTERNATIONAL JOURNAL OF HEAT AND MASS TRANSFER, PERGAMON PRESS, GB, vol. 48, no. 9, 1 avril 2005 (2005-04-01), pages 1688-1704, XP004783086 ISSN: 0017-9310**

**Description**

Domaine technique et art antérieur

L'invention concerne un dispositif de détermination de coefficient d'échange thermique et le procédé associé.

La connaissance du coefficient d'échange thermique entre un fluide qui s'écoule dans une canalisation et la paroi de la canalisation est une donnée essentielle, dans le domaine de la physique, pour calculer les échanges de chaleur entre fluide et paroi.

Dans le domaine industriel, le coefficient d'échange thermique est couramment utilisé, en conception, pour dimensionner les surfaces des échangeurs thermiques et pour calculer les puissances thermiques transmises par un fluide. En détection, la connaissance du coefficient d'échange thermique peut caractériser un dysfonctionnement tel que, par exemple, l'apparition d'un assèchement, l'apparition de cavitations ou la présence d'incondensables.

Le coefficient d'échange thermique ne se mesure pas directement à l'aide d'un capteur. Pour le déterminer, on utilise des modèles mathématiques de corrélation d'échange (modèle de Colburn, de Dittus-Bolter ou de Rosenhow) qui nécessitent la connaissance de certaines caractéristiques du fluide, telles que la vitesse, la viscosité, la température, etc.

La difficulté, voire l'impossibilité, qu'il y a à obtenir un coefficient d'échange thermique à l'aide des modèles de corrélation se manifeste dans de nombreuses applications industrielles comme, par exemple, les mélanges de fluides turbulents à grands écarts de température (fatigue thermique), la présence d'incondensables, la présence de singularités, par exemple quand une paroi fait face à des tourbillons de fluide pouvant conduire à de l'assèchement.

Le dispositif de mesure du coefficient d'échange thermique de l'invention et le procédé associé répondent de façon particulièrement avantageuse au besoin des applications industrielles dans lesquelles les modèles de corrélation d'échange sont inadaptés.

Des systèmes de mesure de flux de chaleur utilisant une canalisation dans laquelle s'écoule un fluide sont également connus dans l'arrière-plan technologique général de l'invention. Il ne s'agit pas, toutefois, de systèmes de détermination de coefficient d'échange thermique.

La demande de brevet français FR 2 266 869 intitulée « Appareil de mesure de l'encrassement d'une surface métallique à courant de liquide » divulgue un tel système. La pièce métallique dont on veut mesurer l'encrassement de la surface est insérée dans la paroi d'une canalisation, la surface métallique encrassée étant au contact du liquide qui circule dans la canalisation et la surface métallique située à l'opposé de la surface encrassée étant au contact d'une résistance chauffante qui chauffe la pièce. Deux capteurs de température sont placés dans la pièce métallique, l'un à proximité de la résistance chauffante et l'autre à proximité du liquide, un troisième capteur étant placé dans le liquide, à proximité de la surface. Les deux capteurs de température qui sont placés dans la pièce métallique mesurent la différence de température qui existe dans toute l'épaisseur de la pièce métallique, caractérisant ainsi l'énergie thermique apportée par la résistance chauffante. Le capteur de température placé dans le liquide mesure la température du liquide à proximité de la surface métallique. La résistance thermique de l'encrassement et, en conséquence, l'encrassement lui-même sont déduits de l'écart des mesures de température entre la pièce métallique et le fluide.

Un tel dispositif n'est pas un dispositif de coefficient d'échange thermique. En effet, un coefficient d'échange thermique se mesure passivement, c'est-à-dire sans apport extérieur de chaleur qui perturbe la mesure.

Par ailleurs, la mesure effectuée concerne l'encrassement de toute la surface de la pièce métallique. C'est donc une mesure intégrée sur la surface entière de la pièce métallique qui est obtenue et non une mesure locale.

Dans un tel système de mesure, l'homme du métier comprend que, pour ce qui concerne la position des différents capteurs, il importe :

a) que les deux capteurs de mesure qui sont placés dans la pièce métallique soient le plus éloignés possibles selon un axe parallèle à l'épaisseur de la pièce métallique (car l'un doit être proche de la résistance chauffante et l'autre proche de la surface encrassée), et

b) que le capteur de mesure placé dans le liquide soit proche de la surface encrassée.

La mesure qui en résulte n'est donc pas une mesure ponctuelle locale, mais une mesure intégrée.

Exposé de l'invention

L'invention concerne un dispositif de détermination de coefficient d'échange thermique entre un fluide et une paroi en un point $P_N$ d'une surface de la paroi en contact avec le fluide, caractérisé en ce qu'il comprend :

- un dispositif de mesure de température qui comprend :

· deux capteurs de température de paroi, un premier capteur de température mesurant une première valeur de température $T_{C1}$ de la paroi en un point $P_1$ et un deuxième capteur de température mesurant une deuxième valeur de température $T_{C2}$ de la paroi en un point $P_2$ sensiblement aligné avec le point $P_1$ selon une droite normale à la surface au point $P_N$, le point $P_1$ étant le plus proche de la surface de la paroi, et

· un capteur de température de fluide mesurant une valeur de température $T_F$ du fluide en un point $P_F$ du fluide sensiblement aligné avec les points $P_1$ et $P_2$, et

- un calculateur qui comprend :

· des premiers moyens pour calculer, à partir des valeurs de température $T_{C1}$ et $T_{C2}$, une valeur de température $T_p$ de la paroi et un flux thermique $\Phi$ donné par l'équation :

$$\Phi = - \lambda \ \mathrm{grad} \ (T_{C1} - T_{C2}),$$

où $\lambda$ est la conductibilité thermique de la paroi,
· et des seconds moyens pour calculer, à partir de la température de fluide $T_F$, de la température $T_P$ et du flux thermique $\Phi$ le coefficient d'échange thermique h sous la forme :

$$h = \Phi \ / \ (T_F - T_P).$$

La température $T_p$ est calculée, par exemple, selon une méthode inverse basée sur l'exploitation du flux déterminé à chaque instant. Cette méthode est présentée dans le document intitulé « THERMAL LOAD DETERMINATION IN THE MIXING TEE IMPACTED BY A TURBULENT FLOW GENERATED BY TWO FLUIDS AT LARGE GAP OF TEMPERATURE » (Olivier Braillard, Yvon Jarny, Guillaume Balmigere ; 13th International Conference on Nuclear Engineering ; Pékin, Chine ; 16-20 Mai 2005 ; ICONE 13-50361).

Selon une caractéristique supplémentaire de l'invention, le dispositif de mesure de température comprend un troisième capteur de température de paroi qui mesure une troisième température $T_{C3}$ de la paroi en un point $P_3$ sensiblement aligné avec les points $P_1$, $P_2$ et $P_F$, le point $P_3$ étant plus éloigné du point $P_N$ que le point $P_2$.

L'invention concerne également un procédé de détermination du coefficient d'échange thermique entre un fluide et une paroi en un point $P_N$ d'une surface de la paroi en contact avec le fluide, caractérisé en ce qu'il comprend :

- une mesure d'une première valeur de température $T_{C1}$ de la paroi en un point $P_1$,
- une mesure d'une deuxième valeur de température $T_{C2}$ de la paroi en un point $P_2$ sensiblement aligné avec le point $P_1$ selon une droite normale à la surface au point $P_N$, le point $P_1$ étant le plus proche de la surface de la paroi,
- une mesure d'une valeur de température $T_F$ du fluide en un point $P_F$ du fluide sensiblement aligné avec les points $P_1$ et $P_2$,
- un calcul d'une température $T_P$ de la paroi à partir des valeurs de température $T_{C1}$ et $T_{C2}$,
- un calcul de flux thermique $\Phi$ tel que :

$$\Phi = - \lambda \ \mathrm{grad} \ (T_{C1} - T_{C2}),$$

où $\lambda$ est la conductibilité thermique de la paroi, et
- un calcul du coefficient d'échange thermique h tel que :

$$h = \Phi \ / \ (T_F - T_P)$$

Selon une caractéristique supplémentaire du procédé de l'invention, une troisième mesure de température de paroi $T_{C3}$ est effectuée en un point $P_3$ sensiblement aligné avec les points $P_1$, $P_2$ et $P_F$, le point $P_3$ étant plus éloigné du point $P_N$ que le point $P_2$, la température $T_{C3}$ étant une valeur de température utilisée comme condition aux limites pour le calcul du coefficient d'échange thermique.

L'invention repose sur des mesures locales précises de température dans une paroi et dans un fluide par l'intermédiaire d'un capteur original associé à un algorithme de traitement du signal qui calcule un ensemble de grandeurs physiques et détermine, ainsi, un coefficient d'échange thermique expérimental local entre la paroi et le fluide.

Brève description des figures :

D'autres caractéristiques et avantages de l'invention apparaîtront à la lecture d'un mode de réalisation préférentiel fait en référence aux figures jointes parmi lesquelles :

- la figure 1 représente une vue en coupe transversale d'un premier mode de réalisation de dispositif de mesure de température qui participe à un dispositif de détermination du coefficient d'échange thermique conforme à l'invention ;
- la figure 2 représente une vue en coupe transversale d'un deuxième mode de réalisation de dispositif de mesure de température qui participe à un dispositif de détermination du coefficient d'échange thermique conforme à l'invention;
- la figure 3 représente un schéma de principe de dispositif de mesure du coefficient d'échange thermique conforme à l'invention;
- la figure 4 représente un exemple de densité spectrale de puissance de coefficient d'échange thermique délivré par un dispositif de détermination de coefficient d'échange thermique conforme à l'invention.

Sur toutes les figures, les mêmes repères désignent les mêmes éléments.

Description détaillée d'un mode de réalisation préférentiel de l'invention.

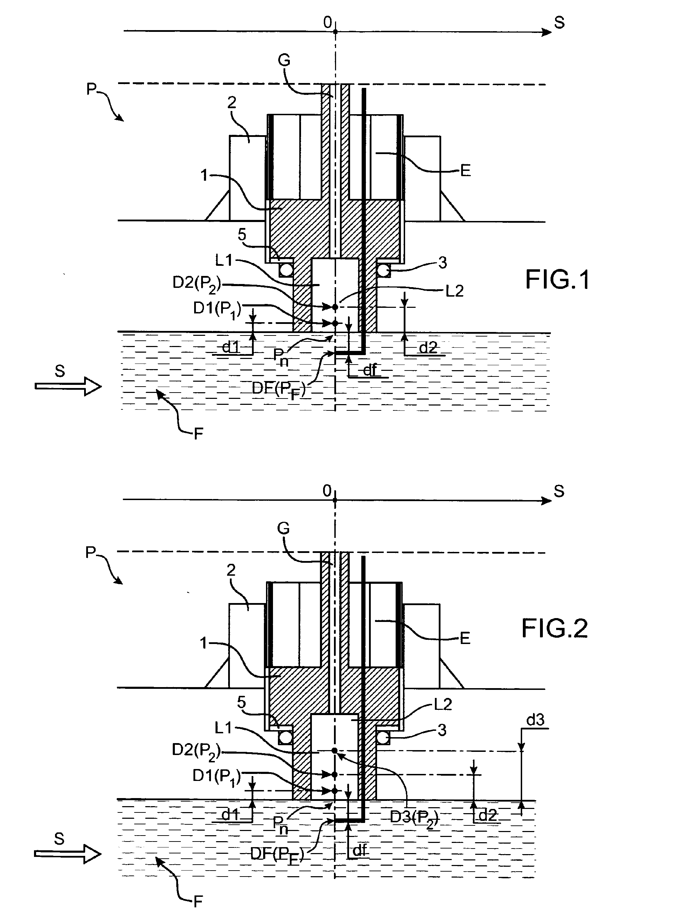

La figure 1 représente une vue en coupe transversale d'un premier mode de réalisation d'un dispositif de mesure de température conforme à l'invention.

Le dispositif de mesure de température comprend deux capteurs de température D1, D2 placés en dans la paroi P et un capteur de température DF placé dans le fluide F. Les capteurs de températures D1 et D2 sont aptes à prélever la température en des points respectifs $P_1$ et $P_2$ de la paroi et le capteur de température DF est apte à prélever la température en un point $P_F$ du fluide. Les capteurs de température D1, D2 et DF sont préférentiellement des thermocouples dont les extrémités sont placées aux points respectifs $P_1$, $P_2$ et $P_F$. Les points $P_1$, $P_2$ et $P_F$ sont préférentiellement alignés selon une droite normale, en un point $P_N$, à la surface de la paroi qui est au contact du fluide.

Les capteurs de température D1, D2 et DF sont placés à proximité de la surface de la paroi P. Le capteur de température DF est orienté pour faire face à l'écoulement S du fluide F. Les thermocouples D1 et D2 présents dans la paroi P sont fixés dans une structure cylindrique formée par l'assemblage de deux demi-lunes L1, L2, cette structure étant elle-même fixée dans un corps principal 1. La droite normale selon laquelle sont alignés les points $P_1$, $P_2$ et $P_F$ est confondue avec l'axe de la structure cylindrique formée par les deux demi-lunes L1, L2. Le thermocouple DF est orienté face à l'écoulement afin de ne pas perturber ce dernier. Les thermocouples D1, D2 et DF ont un diamètre typiquement compris entre 20μm et 200μm. Préférentiellement le diamètre des thermocouples est égal à 25μm. De façon générale, le diamètre du thermocouple DF est choisi en rapport avec la fréquence de coupure que l'on souhaite atteindre. Le thermocouple DF est situé à une distance df de la surface de la paroi P typiquement comprise entre 10μm et 1cm, par exemple 2000μm. Le thermocouple D1, qui est le plus proche du fluide, est situé à une distance d1 de la surface de la paroi P typiquement comprise entre 10μm et 3mm, par exemple 300μm et le thermocouple D2, qui est le plus éloigné du fluide, est situé à une distance d2 de la surface de la paroi P typiquement comprise entre 100μm et 1cm, par exemple 500μm.

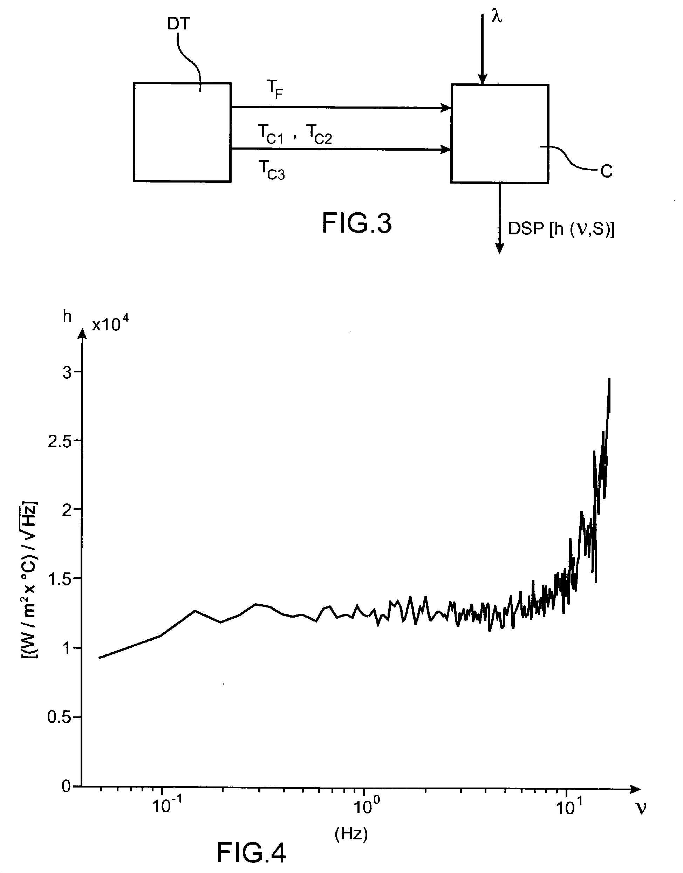

De façon générale, le thermocouple DF présent dans le fluide F doit être, à la fois, suffisamment éloigné des thermocouples D1 et D2 qui sont placés dans la paroi P afin de ne pas perturber la mesure de flux thermique mise en oeuvre par le procédé de l'invention (cf. le procédé décrit plus loin en référence à la figure 3) et suffisamment proche de ces mêmes thermocouples pour que puisse s'établir une bonne corrélation entre la mesure de température du fluide et les mesures de température dans la paroi. La conductibilité thermique de la paroi est un paramètre essentiel qui conditionne le choix des valeurs qui sont données aux distances d1 et d2. Par ailleurs, pour une configuration donnée d'un dispositif de mesure de l'invention quant aux distances df et d1, il a été montré que la corrélation entre la température $T_F$ du fluide mesurée par le thermocouple $D_F$ et la température $T_{C1}$ de paroi mesurée par le thermocouple D1 le plus proche du fluide doit être supérieure à un seuil afin d'obtenir un résultat de calcul fiable du coefficient d'échange thermique. Ce seuil de corrélation peut être égal, par exemple, à 80%. En dessous du seuil de corrélation, il existe une incertitude quant à la fiabilité du résultat obtenu. Avantageusement, le procédé de l'invention prévoit le calcul d'une fonction de cohérence (fonction d'inter-corrélation dans la représentation spectrale) qui estime l'incertitude de la valeur du coefficient d'échange calculé.

La position du corps principal 1 dans la paroi P et, partant, des thermocouples D1 et D2 par rapport au fluide F est mécaniquement ajustée à l'aide d'une cale 5. Le corps principal 1 est fixé à la position choisie dès lors que la face du cylindre que forme les deux demi-lunes qui est au contact du fluide affleure la surface interne de la paroi P. Un écrou E contribue à fixer le corps principal 1 dans la paroi P. L'étanchéité est assurée par un joint torique 3.

Avant montage, le corps principal 1 et les deux demi-lunes L1 et L2 ne sont encore ni associés ni placés dans la paroi P et les fils métalliques qui constituent les deux thermocouples D1 et D2 sont préférentiellement recouverts d'une unique fine couche de Kapton de quelques microns d'épaisseur (absence de magnésie et de gaine). Le thermocouple DF est par contre un thermocouple standard muni d'une gaine électriquement isolante.

Le montage du dispositif de mesure comprend, tout d'abord, la formation du capteur de mesure, puis, l'intégration du capteur de mesure dans la canalisation.

La formation du capteur de mesure comprend les étapes suivantes :

- on passe les fils qui constituent les deux thermocouples D1 et D2 dans une gaine G formée dans le corps principal 1 et ceci jusqu'à ce que ces fils débouchent au-delà d'une cavité ouverte formée dans le corps principal ;
- on place les fils dans des cheminements préalablement effectués dans une première des deux demi-lunes ;
- on fixe les fils dans les cheminements de la première des deux demi-lunes (les corps des fils sont fixés par des points de colle et les extrémités des fils sont fixés par des points de soudure) ;
- on introduit le thermocouple pour la mesure de température du fluide DF dans un trou débouchant de très faible diamètre formé dans le corps principal 1 jusqu'à ce que l'extrémité du thermocouple débouche au-delà du corps principal 1 ;
- on fixe la deuxième demi-lune en face de la première demi-lune afin de constituer un cylindre dans lequel sont insérés les thermocouples D1 et D2 ;
- on introduit le cylindre ainsi formé dans la cavité ouverte formée dans le corps principal 1 mentionnée précédemment (par exemple par ajustement glissant serré) de telle sorte que le cylindre formé par les deux demi-lunes affleure la face du corps principal qui délimite l'ouverture de la cavité ouverte;
- on réalise une soudure d'étanchéité du joint formé par les deux demi-lunes et la face du corps principal 1;
- on réalise l'étanchéité du thermocouple DF à l'endroit où il débouche du trou aménagé dans le corps principal 1 ;
- on replie le thermocouple DF dans une position destinée à l'orienter face à l'écoulement du fluide.

A ce stade, la construction du capteur est terminée et l'intégration du capteur dans la paroi de la canalisation est effectuée. L'intégration du capteur comprend les étapes suivantes :

- on introduit le capteur dans une cavité de la paroi P formée à cet effet, l'introduction du capteur s'accompagnant de la mise en place, au contact de la paroi P, des cales 5 afin d'ajuster la position de la face du capteur destinée à être au contact du fluide (la face du capteur destinée à être au contact du fluide est ainsi positionnée de façon à affleurer la surface interne de la paroi P) ;
- on assure l'étanchéité du capteur à l'aide du joint torique 3, car le fluide ne doit pas s'introduire au niveaux des soudures des thermocouples ; et
- on fixe le capteur dans la paroi P, par exemple à l'aide d'un écrou E.

Un avantage de l'invention est de proposer un dispositif de mesure de très faibles dimensions, par exemple un volume de 0,2 cm$^3$, qui s'intègre dans la canalisation que l'on cherche à étudier sans que la canalisation ne soit perturbée par cette intégration thermiquement non intrusive. Par ailleurs, également de façon avantageuse, le dispositif de mesure est entièrement placé d'un même côté de la canalisation, facilitant ainsi son intégration.

La figure 2 représente un dispositif de mesure de températures conforme à un deuxième mode de réalisation de l'invention. En plus des éléments déjà décrits en référence à la figure 1, le dispositif de la figure 2 comprend un capteur de température supplémentaire D3 à l'intérieur de la paroi P. Le capteur de température D3 a pour fonction de délivrer une température qui est utilisée comme condition aux limites dans les calculs mis en oeuvre par le calculateur C (cf. figure 3). La température délivrée par le capteur D3 est alors considérée comme la température d'un mur semi-infini. De façon préférentielle, le capteur D3 est un thermocouple dont l'extrémité P$_3$ est alignée avec les points P$_1$, P$_2$ et P$_F$. Le capteur D3 est monté dans le dispositif de mesure en même temps que les capteurs D1 et D2. Du fait de sa fonction, contrairement aux autres capteurs, le capteur de température D3 n'est pas placé de façon préférentielle à proximité de la surface de la paroi P en contact avec le fluide. Le capteur D3 est placé à une distance d3 typiquement comprise entre 1mm et 3cm du fluide, par exemple 2,5mm.

La figure 3 représente un schéma de principe de dispositif de détermination de coefficient d'échange thermique qui met en oeuvre le procédé de l'invention. Le dispositif de détermination du coefficient d'échange thermique comprend un dispositif de mesure de températures DT conforme à l'invention et un calculateur C qui calcule le coefficient d'échange thermique à partir des mesures de température délivrées par le dispositif DT.

Le procédé de l'invention sera tout d'abord décrit en référence à un dispositif de mesure DT conforme à la figure 1 dans lequel seuls deux capteurs de température D1 et D2 sont présents dans la paroi P.

A un instant t, le dispositif de mesure DT fournit une mesure de température de fluide $T_F$ délivrée par le capteur DF et deux mesures de température de paroi $T_{C1}$ et $T_{C2}$ délivrées par les capteurs respectifs D1 et D2. La position des capteurs est telle que toutes les mesures de température sont prises sensiblement à une même abscisse s, l'axe des abscisses s étant sensiblement perpendiculaire à la droite normale selon laquelle sont alignés les points $P_1$, $P_2$ et $P_F$. Les températures $T_F(t, s)$, $T_{C1}(t, s)$ et $T_{C2}(t, s)$ sont transmises au calculateur C. A partir des températures $T_{C1}(t, s)$ et $T_{C2}(t, s)$, le calculateur C calcule la température de paroi $T_P(t, s)$ et le flux thermique $\varphi(t, s)$. La température de paroi $T_P(t, s)$ est calculée, de façon connue en soi, par la méthode de Becket le flux thermique $\varphi(t, s)$ est donné par l'équation :

$$\Phi(t,s) = -\lambda \overrightarrow{grad} \left( T_{C1}(t,s) - T_{C2}(t,s) \right) ,$$

où $\lambda$ est la conductibilité thermique de la paroi.

Le coefficient d'échange thermique h(t, s) est alors déduit à l'aide de l'équation :

$$h(t,s) = \frac{\Phi(t,s)}{T_F(t,s) - T_P(t,s)}$$

En sortie du calculateur C, l'algorithme est ainsi susceptible de proposer, en fonction du temps et au point considéré d'abscisse s de la paroi P :

- La température du fluide (moyenne et écart type) ;
- La température de paroi au niveau du capteur D1 (moyenne et écart type) ;
- La température de paroi au niveau du capteur D2 (moyenne et écart type) ;
- La température de la paroi (moyenne et écart type) ;
- Le coefficient d'échange thermique h (moyen et écart type) .

Dans ce premier mode de réalisation de l'invention, où seuls les deux capteurs de température D1 et D2 sont placés dans la paroi P, les conditions aux limites relatives à la température sont fixées a priori, par toute valeur considérée comme apte à pouvoir être utilisée.

De façon préférentielle, les données délivrées par le calculateur C sont exprimées dans le domaine fréquentiel. C'est ainsi que le calculateur C délivre préférentiellement la densité spectrale de puissance DSP[h(v, s)] à partir de la transformée de Fourier du coefficient d'échange h(t, s).

Le procédé de l'invention calcule alors, pour chaque pas v de fréquence, l'expression suivante :

$$DSP\,[h(v,s)] = \frac{DSP\,\Phi(v,s)}{DSP\,\Delta T(v,s)}$$

avec

$$DSP\,[\Delta T(v,s)] = DSP\left[ T_F(t,s) - T_P(t,s) \right](v,s)$$

L'algorithme prévoit une option selon laquelle la détermination de la densité spectrale de puissance DSP[$\Delta T$] est calculée en supposant les signaux de mesure représentatifs des températures $T_F$ et $T_P$ sans déphasage (signaux synchrones).

Dans ce cas, la densité spectrale de puissance DSP[$\Delta T$] s'écrit:

$$DSP\left[\Delta T\left(v,s\right)\right]= DSP[T_{F}\left(v,s\right)] - DSP[T_{P}\left(v,s\right)]$$

Comme cela a été mentionné précédemment, le procédé de l'invention calcule une fonction de cohérence, ou fonction d'inter-corrélation en représentation spectrale, qui estime l'incertitude de la valeur du coefficient d'échange.

Un exemple de distribution spectrale de puissance du coefficient d'échange h est donné en figure 4. Le coefficient h(v) est exprimé en $\left[\left(W \ / \ m^{2}x°C\right) / \sqrt{Hz}\right]x10^{4}$. Les conditions d'obtention du coefficient d'échange de la figure 4 sont :

- Une fréquence d'échantillonnage égale à 50Hz ;
- Une fréquence de début de mesure égale à 0,040Hz ;
- Une fréquence de fin de mesure égale à 10Hz ;
- Une taille de fenêtre d'analyse égale à 1024 ;
- Un temps d'acquisition égal à 0,010s ;
- Un temps de fin d'acquisition égal à 900s.

Sur la base du coefficient d'échange représenté en figure 4, les écarts types Sigma(df) du coefficient d'échange h(v) peuvent être calculés sur des intervalles de fréquence df. Il vient :

- Sigmas($\leq$1Hz) = 11922 W/m$^2$x°C ;
- Sigma(1Hz-2Hz) = 12185 W/m$^2$x°C ;
- Sigma(2Hz-3Hz) = 12521 W/m$^2$x°C ;
- Sigma(3Hz-4Hz) = 12102 W/m$^2$x°C ;
- Sigma(4Hz-5Hz) = 12286 W/m$^2$x°C ;
- Sigma(5Hz-6Hz) = 12439 W/m$^2$x°C ;
- Sigma(6Hz-7Hz) = 12880 W/m$^2$x°C ;
- Sigma(7Hz-8Hz) = 12726 W/m$^2$x°C ;
- Sigma(8Hz-9Hz) = 13691 W/m$^2$x°C ;
- Sigma(9Hz-10Hz) = 14122 W/m$^2$x°C.

L'intégration de la distribution spectrale de puissance par bandes de fréquences permet avantageusement de situer facilement la valeur du coefficient d'échange thermique h(v) et de savoir dans quelle bande de fréquence l'échange thermique est le meilleur.

Le procédé de l'invention va maintenant être décrit dans le cas où un troisième thermocouple D3 est placé dans la paroi P. Dans ce cas, la température $T_{C3}$ qui est mesurée par le capteur D3 est utilisée comme condition aux limites dans les calculs mis en oeuvre par le calculateur C.

Par ailleurs, la connaissance de la température $T_{C3}$ délivrée par le capteur D3 permet, avantageusement, de calculer, en plus du flux $\Phi$ mentionné précédemment, le flux thermique $\Phi_a$(t, s) tel que :

$$\Phi_{a}\left(s\right)=- \lambda \overline{grad}\left(T_{C1}\left(t,s\right) - T_{C3}\left(t,s\right)\right)$$

Les flux $\Phi$(t, s) et $\Phi_a$(t, s) sont alors comparés et, si ces flux sont sensiblement égaux, il est possible de conclure que ni puits de chaleur et ni source de chaleur ne perturbent la mesure du flux thermique. On dit alors que l'on se trouve dans une situation purement 1D.

De façon générale, le dispositif de mesure de l'invention délivre des mesures locales (i.e. quasi-ponctuelles) moyennes et fluctuantes. Un autre avantage de l'invention est en conséquence de permettre l'établissement d'une cartographie précise du coefficient d'échange thermique sur la base d'une pluralité de mesures faites, en différents points, à l'aide de différents dispositifs de mesure.

**Revendications**

1. Dispositif de détermination de coefficient d'échange thermique entre un fluide (F) et une paroi (P) en un point $P_N$

d'une surface de la paroi (P) en contact avec le fluide (F), **caractérisé en ce qu'**il comprend :

- un dispositif de mesure de température (DT) qui comprend :

· deux capteurs de température de paroi (D1, D2), un premier capteur de température (D1) mesurant une première valeur de température $T_{C1}$ de la paroi en un point $P_1$ situé à une distance d1 de la surface de la paroi sensiblement comprise entre 10μm et 3mm et un deuxième capteur de température (D2) mesurant une deuxième valeur de température $T_{C2}$ de la paroi en un point $P_2$ sensiblement aligné avec le point $P_1$ selon une droite normale à la surface au point $P_N$, le point $P_2$ étant situé à une distance d2 de la surface de la paroi sensiblement comprise entre 300μm et 1cm, la distance d2 étant supérieure à la distance d1, et · un capteur de température de fluide (DF) placé en un point $P_F$ du fluide sensiblement aligné avec les points $P_1$ et $P_2$, le point $P_F$ étant situé à une distance df de la surface de la paroi sensiblement comprise entre 10μm et 1cm, et

- un calculateur (C) qui comprend :

· des premiers moyens pour calculer, à partir des valeurs de température $T_{C1}$ et $T_{C2}$, une valeur de température $T_P$ de la paroi et un flux thermique $\Phi$ donné par l'équation :

$$\Phi = - \lambda \ \text{grad} \ (T_{C1} - T_{C2}),$$

où $\lambda$ est la conductibilité thermique de la paroi, · et des seconds moyens pour calculer, à partir de la température de fluide $T_F$, de la température $T_P$ et du flux thermique $\Phi$ le coefficient d'échange thermique h sous la forme :

$$h = \varphi \ / \ (T_F - T_P).$$

2. Dispositif selon la revendication 1, dans lequel le dispositif de mesure de température comprend un troisième capteur de température de paroi (D3) qui mesure une troisième température $T_{C3}$ de la paroi en un point $P_3$ sensiblement aligné avec les points $P_1$, $P_2$ et $P_F$, le point $P_3$ étant situé à une distance d3 de la surface de la paroi sensiblement comprise entre 1mm et 3cm, la distance d3 étant supérieure à la distance d2.

3. Dispositif selon la revendication 2, dans lequel le calculateur (C) comprend des troisièmes moyens pour calculer, à partir des valeurs de température $T_{C2}$ et $T_{C3}$, un flux thermique supplémentaire $\varphi_a$ donné par l'équation :

$$\Phi_a = - \lambda \ \text{grad} \ (T_{C2} - T_{C3}).$$

4. Dispositif selon l'une quelconque des revendications précédentes, dans lequel chaque capteur de température est un thermocouple.

5. Dispositif selon la revendication 4, dans lequel les thermocouples sont placés dans une structure en forme de cylindre droit formée par un assemblage de deux demi-lunes (L1, L2), la droite normale à la surface de la paroi au point $P_N$ étant un axe central du cylindre droit, une face du cylindre droit au contact avec le fluide (F) affleurant la surface de la paroi.

6. Procédé de détermination de coefficient d'échange thermique entre un fluide (F) et une paroi (P) en un point $P_N$ d'une surface de la paroi (P) en contact avec le fluide (F), **caractérisé en ce qu'**il comprend :

- une mesure d'une première valeur de température $T_{C1}$ de la paroi en un point $P_1$ situé à une distance d1 de la surface de la paroi sensiblement comprise entre 10μm et 3mm,
- une mesure d'une deuxième valeur de température $T_{C2}$ de la paroi en un point $P_2$ sensiblement aligné avec le point $P_1$ selon une droite normale à la surface au point $P_N$, le point $P_2$ étant situé à une distance d2 de la surface de la paroi sensiblement comprise entre $300\mu$m et 1cm, la distance d2 étant supérieure à la distance d1,
- une mesure d'une valeur de température $T_F$ du fluide en un point $P_F$ du fluide sensiblement aligné avec les points $P_1$ et $P_2$, le point $P_F$ étant situé à une distance df de la surface de la paroi sensiblement comprise entre $10\mu$m et 1cm,
- un calcul d'une température moyenne $T_P$ de la paroi à partir des valeurs de température $T_{C1}$ et $T_{C2}$,
- un calcul de flux thermique $\Phi$ tel que :

$$\Phi = - \lambda \; grad \; (T_{C1} - T_{C2}),$$

où $\lambda$ est la conductibilité thermique de la paroi, et
- un calcul du coefficient d'échange thermique h tel que :

$$h = \Phi \; / \; (T_F - T_P)$$

7. Procédé selon la revendication 6, dans lequel la température $T_P$ est calculée par la méthode de Beck.

8. Procédé selon l'une quelconque des revendications 6 ou 7, dans lequel une troisième mesure de température de paroi $T_{C3}$ est effectuée en un point $P_3$ sensiblement aligné avec les points $P_1$, $P_2$ et $P_F$, le point $P_3$ étant situé à une distance d3 de la surface de la paroi sensiblement comprise entre 1mm et 3cm, la distance d3 étant supérieure à la distance d2, la température $T_{C3}$ étant une valeur de température utilisée comme condition aux limites pour le calcul du coefficient d'échange thermique.

9. Procédé selon la revendication 8, dans lequel la température $T_{C3}$ est utilisée pour un calcul de flux $\Phi_a$ tel que :

$$\Phi_a = - \lambda \; grad \; (T_{C2} - T_{C3}).$$

10. Procédé selon l'une des revendications 6 à 9, dans lequel est calculée une fonction de cohérence qui estime une incertitude de la valeur calculée du coefficient d'échange thermique.

**Claims**

1. A device for determining the thermal exchange coefficient between a fluid (F) and a wall (P) at a point $P_N$ of a surface of the wall (P) in contact with the fluid (F), **characterised in that** it includes:

- a temperature-measuring device (DT) which includes:

· two wall temperature sensors (D1, D2), with a first temperature sensor (D1) measuring a first temperature value $T_{C1}$ of the wall at a point $P_1$ located at a distance d1 from the surface of the wall, d1 being comprised between $10\mu$m and 3mm, a second temperature sensor (D2) measuring a second temperature value $T_{C2}$ of the wall at a point $P_2$ which is roughly aligned with point $P_1$ in a straight line normal to the surface at point $P_N$, the point P2 being located at a distance d2 from the surface of the wall, distance d2 being comprised between $300\mu$m and 1cm and being greater than distance d1, and
· a fluid temperature sensor (DF) located at a point $P_F$ of the fluid, the point $P_F$ being roughly aligned with points $P_1$ and $P_2$ and being located at a distance df from the surface of the wall, df being roughly comprised between $10\mu$m and 1cm, and

- a computer (C) which includes:

· first means for calculating, from the temperature values $T_{C1}$ and $T_{C2}$, a temperature value $T_P$ of the wall and a thermal flow $\Phi$ given by the following equation:

$$\Phi = - \lambda \; grad \; (T_{C1} - T_{C2}),$$

where $\lambda$ is the thermal conductivity of the wall,
· and second means for calculating, from fluid temperature $T_F$, temperature $T_P$ and thermal flow $\Phi$ the thermal exchange coefficient h in the following form:

$$h = \varphi/(T_F - T_P).$$

2. A device according to claim 1, in which the temperature measuring device includes a third wall temperature sensor (D3) which measures a third temperature $T_{C3}$ of the wall at a point $P_3$ roughly aligned with points $P_1$, $P_2$ and $P_F$, where point $P_3$ is located at a distance d3 from the surface of the wall, d3 being roughly comprised between 1mm and 3cm and being greater than distance d2.

3. A device according to claim 2, in which the computer (C) includes third means for calculating, from the temperature values $T_{C2}$ and $T_{C3}$, an additional thermal flow $\varphi_a$ given by the following equation:

$$\Phi_a = - \lambda \; grad \; (T_{C2} - T_{C3}).$$

4. A device according to any of the previous claims, in which each temperature sensor is a thermocouple.

5. A device according to claim 4, in which the thermocouples are positioned in a structure of cylindrical shape formed by an assembly of half-moons (L1, L2), where the straight line normal to the surface of the wall at the point $P_N$ is a central axis of the straight cylinder, and where a face of the straight cylinder in contact with the fluid is level with the surface of the wall.

6. A method for determining the thermal exchange coefficient between a fluid (F) and a wall (P) at a point $P_N$ of a surface of the wall (P) in contact with the fluid (F), **characterised in that** it includes:

   - a measurement of a first temperature value $T_{C1}$ of the wall at a point $P_1$ located at a distance d1 from the surface of the wall roughly comprised between $10\mu$m and 3mm,
   - a measurement of a second temperature value $T_{C2}$ of the wall at a point $P_2$ roughly aligned with point $P_1$ in a straight line normal to the surface at the point $P_N$, the point P2 being located at a distance d2 from the surface of the wall, distance d2 being roughly comprised between $300\mu$m and being greater than distance d1,
   - a measurement of a temperature value $T_F$ of the fluid at a point $P_F$ of the fluid, the point $P_F$ being roughly aligned with points $P_1$ and $P_2$ and being located at a distance df from the surface of the wall, df being roughly comprised between $10\mu$m and 1cm,
   - a calculation of an average temperature $T_P$ of the wall from the temperature values $T_{C1}$ and $T_{C2}$,
   - a calculation of thermal flow $\Phi$ such that:

$$\Phi = - \lambda \; grad \; (T_{C1} - T_{C2}),$$

   where $\lambda$ is the thermal conductivity of the wall, and
   - a calculation of the thermal exchange coefficient h such that:

$$h = \Phi/(T_F - T_P)$$

7. A method according to claim 6, in which the temperature $T_P$ is calculated by the Beck method.

8.  A method according to either of the claims 6 or 7, in which a third wall temperature measurement $T_{C3}$ is made at a point $P_3$ roughly aligned with points $P_1$, $P_2$ and $P_F$, where point $P_3$ is located at a distance d3 from the surface of the wall, distance d3 being roughly comprised between 1mm and 3cm and being greater than distance d2, temperature $T_{C3}$ being a temperature value used as a boundary condition for the calculation of the thermal exchange coefficient.

9.  A method according to claim 8, in which the temperature $T_{C3}$ is used for a calculation of flow $\Phi_a$ such that:

$$\Phi_a = - \lambda \ \mathrm{grad} \ (T_{C2} - T_{C3}).$$

10. A method according to any of the claims 6 to 9, in which a consistency function is calculated which estimates an uncertainty of the calculated value of the thermal exchange coefficient.

**Patentansprüche**

1.  Einrichtung zur Bestimmung eines Wärmeübertragungskoeffizienten zwischen einem Fluid (F) und einer Wand (P) in einem Punkt $P_N$ einer Oberfläche der Wand (P) in Kontakt mit dem Fluid (F), **dadurch gekennzeichnet, dass** sie umfasst:

    ● eine Einrichtung zum Messen der Temperatur (DT), die umfasst:

    o zwei Wand-Temperatursensoren (D1, D2), wobei ein erster Temperatursensor (D1) einen ersten Temperaturwert $T_{C1}$ der Wand in einem Punkt $P_1$ misst, der sich in einem Abstand d1 zu der Oberfläche der Wand befindet, der ungefähr zwischen 10 $\mu$m und 3 mm liegt, und wobei ein zweiter Temperatursensor (D2) einen zweiten Temperaturwert $T_{C2}$ der Wand in einem Punkt $P_2$ misst, der mit dem Punkt $P_1$ im Wesentlichen auf einer Linie liegt, längs einer Normalgeraden auf die Oberfläche in dem Punkt $P_N$, wobei sich der Punkt $P_2$ in einem Abstand d2 zu der Oberfläche der Wand befindet, der ungefähr zwischen 300 $\mu$m und 1 cm liegt, wobei der Abstand d2 größer ist als der Abstand d1 und
    o einen Fluid-Temperatursensor (DF), der in einem Punkt $P_F$ des Fluids angeordnet ist, der mit den Punkten $P_1$ und $P_2$ im Wesentlichen auf einer Linie liegt, wobei sich der Punkt $P_F$ in einem Abstand df zu der Oberfläche der Wand befindet, der ungefähr zwischen 10 $\mu$m und 1 cm liegt, und

    ● eine Berechnungseinrichtung (C), die umfasst:

    o erste Mittel, um ausgehend von den Temperaturwerten $T_{C1}$ und $T_{C2}$, einen Temperaturwert $T_P$ der Wand und einen Wärmefluss $\Phi$ zu berechnen, der gegeben ist durch die Gleichung:

$$\Phi = - \lambda \ \mathrm{grad}(T_{C1} - T_{C2}),$$

    wobei $\lambda$ die Wärmeleitfähigkeit der Wand ist, und
    o zweite Mittel, um, ausgehend von der Fluid-Temperatur $T_F$, der Temperatur $T_P$ und dem Wärmefluss $\Phi$ den Wärmeübertragungskoeffizienten h in der Form:

$$h = \varphi \ / \ (T_F - T_P)$$

    zu berechnen.

2.  Einrichtung nach Anspruch 1, wobei die Einrichtung zum Messen der Temperatur einen dritten Wand-Temperatursensor (D3) umfasst, der eine dritte Temperatur $T_{C3}$ der Wand in einem Punkt $P_3$ misst, der mit den Punkten $P_1$, $P_2$ und $P_F$ im Wesentlichen auf einer Linie liegt, wobei sich der Punkt $P_3$ in einem Abstand d3 zu der Oberfläche der Wand befindet, der ungefähr zwischen 1 mm und 3 cm liegt, wobei der Abstand d3 größer ist als der Abstand d2.

**3.** Einrichtung nach Anspruch 2, wobei die Berechnungseinrichtung (C) dritte Mittel umfasst, um, ausgehend von den Temperaturwerten $T_{C2}$ und $T_{C3}$ einen ergänzenden Wäremfluss $\varphi_a$ zu berechnen, der gegeben ist durch die Gleichung:

$$\Phi_a = -\lambda\,\mathrm{grad}(T_{C2} - T_{C3}).$$

**4.** Einrichtung nach einem der vorhergehenden Ansprüche, wobei jeder Temperatursensor ein Thermoelement ist.

**5.** Einrichtung nach Anspruch 4, wobei die Thermoelemente in einer Struktur in der Form eines geraden Zylinders angeordnet sind, die gebildet ist durch Zusammensetzen von zwei Halbmond-Elementen (L1, L2) wobei die Normalgerade auf die Oberfläche der Wand im Punkt $P_N$ eine Mittelachse von dem geraden Zylinder ist, wobei eine Seite des geraden Zylinders in Kontakt mit dem Fluid (F) auf gleicher Höhe mit der Oberfläche der Wand ist.

**6.** Verfahren zur Bestimmung eines Wärmeübertragungskoeffizienten zwischen einem Fluid (F) und einer Wand (P) in einem Punkt $P_N$ einer Oberfläche der Wand (P) in Kontakt mit dem Fluid (F), **dadurch gekennzeichnet, dass** es umfasst:

● eine Messung von einem ersten Temperaturwert $T_{C1}$ der Wand in einem Punkt $P_1$, der sich in einem Abstand d1 von der Oberfläche der Wand befindet, der ungefähr zwischen 10 $\mu$m und 3 mm liegt,
● eine Messung von einem zweiten Temperaturwert $T_{C2}$ der Wand in einem Punkt $P_2$, der mit dem Punkt $P_1$ im Wesentlichen auf einer Linie liegt, längs einer Normalgeraden auf die Oberfläche im Punkt $P_N$, wobei der Punkt $P_2$ sich in einem Abstand d2 von der Oberfläche der Wand befindet, der ungefähr zwischen 300 $\mu$m und 1 cm liegt, wobei der Abstand d2 größer ist als der Abstand d1,
● eine Messung von einem Temperaturwert $T_F$ von dem Fluid in einem Punkt $P_F$ des Fluids, der mit den Punkten P1 und P2 im Wesentlichen auf einer Linie liegt, wobei sich der Punkt $P_F$ in einem Abstand df von der Oberfläche der Wand befindet, der ungefähr zwischen 10 $\mu$m und 1 cm liegt,
● eine Berechnung einer mittleren Temperatur $T_P$ der Wand, ausgehend von den Temperaturwerten $T_{C1}$ und $T_{C2}$,
● eine Berechnung des Wärmeflusses $\Phi$, so dass:

$$\Phi = -\lambda\,\mathrm{grad}(T_{C1} - T_{C2}),$$

wobei $\lambda$ die Wärmeleitfähigkeit der Wand ist, und
● eine Berechnung des Wärmeübertragungskoeffizienten h, so dass:

$$h = \Phi\,/\,(T_F - T_P).$$

**7.** Verfahren nach Anspruch 6, wobei die Temperatur $T_P$ durch das Verfahren von Beck berechnet wird.

**8.** Verfahren nach einem der Ansprüche 6 oder 7, wobei eine dritte Messung der Temperatur der Wand $T_{C3}$ in einem Punkt $P_3$ durchgeführt wird, der mit den Punkten $P_1$, $P_2$ und $P_F$ im Wesentlichen auf einer Linie liegt, wobei sich der Punkt $P_3$ in einem Abstand d3 zu der Oberfläche der Wand befindet, der ungefähr zwischen 1 mm und 3 cm liegt, wobei der Abstand d3 größer ist als der Abstand d2, wobei die Temperatur $T_{C3}$ ein Temperaturwert ist, der als Grenzbedingung für die Berechnung des Wärmeübertragungskoeffizienten verwendet wird.

**9.** Verfahren nach Anspruch 8, wobei die Temperatur $T_{C3}$ für eine Berechnung eines Flusses $\Phi_a$ verwendet wird, so dass:

$$\Phi_a = - \lambda \, grad(T_{C2} - T_{C3}).$$

10. Verfahren nach einem der Ansprüche 6 bis 9, wobei eine KohärenzFunktion berechnet wird, die eine Unsicherheit von dem berechneten Wert des Wärmeübertragungskoeffizienten abschätzt.

$$\Phi_a = - \lambda \, grad(T_{C2} - T_{C3}).$$

0    S

P

G

2

1

E

5

L1

D2(P$_2$)

D1(P$_1$)

d1

P$_n$

d2

df

DF(P$_F$)

3

L2

S

F

FIG.1

0    S

P

G

2

1

E

5

L2

L1

D2(P$_2$)

D1(P$_1$)

d1

P$_n$

d3

D3(P$_2$)

d2

df

DF(P$_E$)

3

S

F

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2266869

**Littérature non-brevet citée dans la description**

- **OLIVIER BRAILLARD ; YVON JARNY ; GUILLAUME BALMIGERE.** THERMAL LOAD DETERMINATION IN THE MIXING TEE IMPACTED BY A TURBULENT FLOW GENERATED BY TWO FLUIDS AT LARGE GAP OF TEMPERATURE. *13th International Conference on Nuclear Engineering ; Pékin, Chine,* 16 Mai 2005